# FASCICULE DE BREVET EUROPEEN

(11) **EP 1 627 255 B1**
(45) Date de publication et mention de la délivrance du brevet: **31.03.2010**
(21) Numéro de dépôt: 04742791.9
(22) Date de dépôt: 19.05.2004
(51) Int. Cl.: G03B 21/58

(54) **DISPOSITIF DE MASQUES POUR ECRAN DE CINEMA**
MASKIERUNGSEINRICHTUNG FÜR EINE KINOLEINWAND
MASKING DEVICE FOR A CINEMA SCREEN

(30) Priorité: 23.05.2003 FR 0306277; 16.06.2003 FR 0307216
(43) Date de publication de la demande: 22.02.2006
(73) Titulaire: Danthony, Guy, 01600 Parcieux (FR)
(72) Inventeur: Danthony, Guy, 01600 Parcieux (FR)
(74) Mandataire: Myon, Gérard Jean-Pierre
(86) Numéro de dépôt international: PCT/FR2004/001248
(87) Numéro de publication internationale: WO 2004/107039

(56) Documents cités:
- US-A- 1 857 673
- US-A- 5 343 257
- US-A- 5 523 880
- DATABASE WPI Section PQ, Week 198249 Derwent Publications Ltd., London, GB; Class P27, AN 1982-A8333J XP002305572 -& SU 900 842 A (SP K B MIN VYSSHEGO SREDNEGO S), 30 janvier 1982 (1982-01-30)

## Description

La présente invention concerne un dispositif de masques pour écran de cinéma.

Lors d'une séance de vidéoprojection, en particulier à domicile, un critère important de la qualité de projection est le rapport de contraste de l'image projetée. Ce rapport de contraste est obtenu en grande partie grâce à la plus ou moins grande qualité du vidéoprojecteur. Néanmoins, le contraste de l'image perçue par les spectateurs dépend également de l'environnement autour de l'écran.

Ainsi, lorsqu'une image est projetée sur un écran blanc, et ne couvre pas la totalité de cet écran, les marges restantes apparaissent grises (sombres) lors de la projection, ce qui diminue la qualité du contraste d'image perçu par les spectateurs.

Pour cette raison, des masques noirs sont commercialisés qui permettent de couvrir les marges supérieure et inférieure d'un écran, et éventuellement les marges gauche et droite, lorsque le format d'image ne permet pas de couvrir la totalité de la surface d'écran.

Les dispositifs connus permettent de masquer les marges haute, basse, gauche et/ou droite d'un écran de format 4/3, lorsque l'image projetée est en format 16/9.

Néanmoins, d'autres formats de vidéoprojection existent, pour lesquels les marges haute et basse ne sont pas identiques, c'est-à-dire que la ligne médiane horizontale de l'image projetée est située au-dessus ou au-dessous de la ligne médiane horizontale de l'écran.

En outre, dans les dispositifs connus qui proposent des masques latéraux gauche et droit, ces derniers prennent la forme de toiles qui sont déroulées depuis le haut de l'écran lorsque l'on souhaite réduire la largeur d'écran disponible. Avec de tels dispositifs, il est impossible d'obtenir une variation précise de la largeur d'écran occultée, cette dernière correspondant en effet alors à la largeur de toile de chacun des masques latéraux.

Enfin, les dispositifs existants sont de structure complexe, nécessitent de nombreux moteurs électriques, et sont très onéreux à la production pour le fabricant, et à l'achat pour le client final.

Le but de la présente invention est donc de fournir un dispositif de masques pour écrans de cinéma d'une structure telle qu'elle permette de résoudre les désavantages liés à la limitation de fonctionnement des dispositifs existants, en permettant de masquer au choix les marges latérales et/ou haute et basse de l'écran, de sorte que le positionnement relatif des masques s'adapte à n'importe quel format d'image projetée.

Le but de l'invention est atteint avec un dispositif de masques pour écrans de cinéma comprenant au moins deux masques disposés en avant dudit écran, et placés par paires symétriquement le long d'au moins deux côtés gauche et droit, et/ou haut et bas de celui-ci, chaque masque comprenant un axe d'enroulement et une toile enroulée autour dudit axe, chaque axe d'enroulement étant dépassant de part et d'autre de la toile, et chaque toile comportant un bord enroulé et un bord libre.

Plus particulièrement, selon l'invention au moins le masque inférieur et/ou la paire de masques gauche et droit comporte(nt):
(i) un raidisseur de maintien du bord libre de la toile de chaque masque, la longueur du raidisseur étant supérieure à la longueur de la toile, et
(ii) des moyens de commande du positionnement du raidisseur dans un plan sensiblement parallèle au plan de l'écran et selon une direction perpendiculaire à la direction de déroulement de la toile, lesdits moyens consistant d'une part en des filins fixés chacun sur une extrémité du raidisseur dépassant de la toile et reliant chacun, selon une direction sensiblement parallèle à la direction de déroulement de la toile, lesdites extrémités à l'axe d'enroulement par l'intermédiaire de poulies de renvoi disposées chacune en regard d'une extrémité dépassante correspondante et à distance de l'axe d'enroulement, et d'autre part en des moyens d'actionnement en rotation de l'axe d'enroulement, de sorte que chaque toile peut être déroulée depuis son axe en direction du centre de l'écran pour adapter la surface occultante dudit masque, alors que la première extrémité de chaque filin est fixée à la partie dépassante du raidisseur, tandis que l'autre extrémité est fixée directement sur le tambour de l'axe motorisé correspondant.

Le dispositif selon l'invention, de par sa structure simple, permet un coût de fabrication et de mise en oeuvre particulièrement peu élevé, et permet également une adaptation à tous types d'écrans plats, depuis les petits écrans de "home cinéma", jusqu'aux écrans géants des salles de spectacle. Ce dispositif peut être installé sur des écrans neufs, ou adapté à des écrans déjà en place.

De plus et surtout, il permet de réutiliser un mécanisme quasiment identique à tous les masques du dispositif, de sorte que le coût de fabrication global est très réduit. Ainsi, le dispositif selon invention peut ne comporter que des masques haut et bas, ou des masques gauche et droit, ou bien une combinaison de ces deux paires de masques selon le type d'écran utilisé et selon les formats de projection que l'on souhaite pouvoir lire. Dans tous les cas, on dispose d'un dispositif simple et peu coûteux à fabriquer, de maintenance facile et qui, s'il combine les deux types de paires de masques, constitue alors un système de conversion universel de la surface d'écran au format d'image projeté.

En outre, la maintenance et le remplacement éventuel de certains éléments constitutifs des masques est aisée et économique puisque ces éléments constitutifs sont peu nombreux et d'accès très facile.

Avantageusement, le dispositif selon l'invention comporte une paire de masques supérieur et inférieur, le masque supérieur comprenant des moyens d'actionnement permettant la rotation de son axe d'enroulement et donc l'ajustement de la surface occultante de la toile correspondante, les moyens d'actionnement du masque inférieur étant indépendants de ceux du masque supérieur.

De préférence, le dispositif selon la présente invention comporte des masques gauche et droit dont les moyens de commande sont reliés, de sorte que les mouvements des toiles desdits masques gauche et droit sont symétriquement opposés par rapport à l'axe médian vertical de l'écran.

Selon une première forme d'exécution possible de l'invention, la liaison des moyens de commande des masques gauche et droit consiste en une liaison mécanique directe entre leurs axes d'enroulement, de sorte que les mouvements de rotation desdits axes soient simultanés, en sens inverse l'un de l'autre.

Selon une seconde forme d'exécution possible de l'invention, la liaison des moyens de commande des masques gauche et droit consiste en une liaison électrique entre les moyens d'actionnement en rotation de leurs axes d'enroulement respectifs, de sorte que les mouvements de rotation desdits axes soient simultanés, en sens inverse l'un de l'autre.

Avantageusement, le dispositif selon l'invention comporte des masques gauche et droit dont les raidisseurs sont chacun maintenus verticalement par des moyens de maintien.

Dans ce dernier cas, les moyens de maintien des raidisseurs des masques gauche et droit consistent de préférence en au moins une glissière disposée horizontalement au-dessus et/ou au dessous de l'écran, dans laquelle sont insérées en coulissement au moins un ergot - ou guide - du raidisseur.

Dans tous les cas, la largeur de la toile de chaque masque est de préférence supérieure ou égale à la largeur ou à la hauteur de l'écran.

En outre, le bord libre de la toile de chaque masque équipé d'un raidisseur recouvre de préférence le raidisseur de maintien de ce masque, au moins sur la face avant de celui-ci.

De préférence également, la toile de chaque masque est enroulée autour de l'axe d'enroulement correspondant par l'arrière, ou par l'avant, de celui-ci, de telle sorte que la toile de chaque masque est verticale et donc située dans un plan parallèle au plan général de l'écran.

Les moyens d'actionnement en rotation des axes d'enroulement consistent, selon une forme d'exécution préférée de l'invention, chacun en un moteur disposé à l'intérieur de chacun desdits axes d'enroulement et relié à un point fixe situé à l'extérieur dudit axe.

Dans ce dernier cas, chaque moteur est de préférence commandé à distance par télécommande.

Enfin, chaque toile est de préférence constituée d'un tissu noir mat qui permet d'absorber les rayons lumineux projetés sur l'écran en bordure de l'image.

Pour sa bonne compréhension, l'invention va à présent être décrite en détail, en référence au dessin schématique annexé, représentant à titre d'exemple non limitatif, une forme particulière d'exécution d'un dispositif de masques selon l'invention.
La figure 1 est une vue en perspective d'un dispositif de masques installé dans une salle de cinéma;
La figure 2 est une vue schématique partielle de face du masque inférieur d'un dispositif de masque;
La figure 3 est une vue schématique de profil selon III/III de figure 1, montrant le masque inférieur d'un dispositif de masque;
La figure 4 est une vue schématique de face d'un dispositif de masques gauche et droit, l'un des masques étant déroulé, l'autre étant complètement enroulé;
La figure 5 est une vue de face d'un écran de cinéma équipé d'un dispositif avec masques haut, bas, gauche et droit selon l'invention;
La figure 6 est une vue schématique agrandie en perspective de face, de la portion supérieure droite d'un dispositif de masque, le carter de protection étant illustré en transparence;
La figure 7 est une vue de dessus en coupe selon VII/VII de figure 6;
La figure 8 est une vue de côté en coupe selon VIII/VIII de figure 5;
La figure 9 est une vue similaire à figure 6, illustrant une variante d'exécution de l'invention.

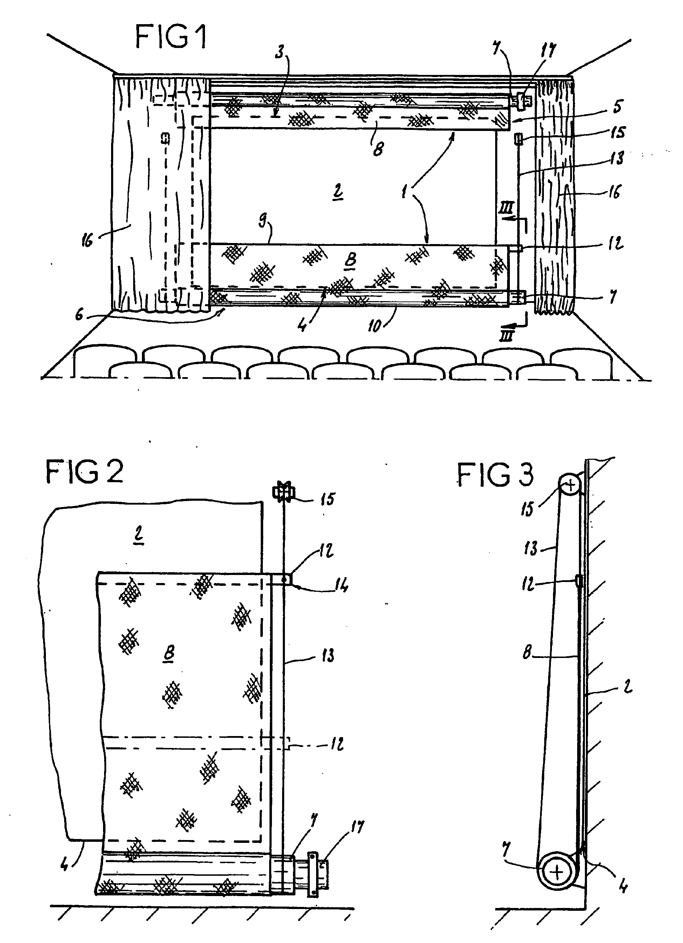

Selon un premier exemple, le dispositif de masques pour écran de cinéma peut n'être constitué que d'une paire de masques haut et bas, comme cela est représenté aux figures 1 à 3.

Le dispositif 1 est alors destiné à être installé, comme illustré à la figure 1, autour d'un écran de cinéma 2, afin de masquer, au moins partiellement les bords supérieur 3 et inférieur 4 de celui-ci.

Le dispositif de masque comprend alors un masque supérieur 5 et un masque inférieur 6, disposés en avant de l'écran 2 comme cela est montré à la figure 3.

Chaque masque 5, 6 comprend un axe d'enroulement 7 et une toile 8 enroulée autour dudit axe. L'axe d'enroulement du masque supérieur 5 est disposé horizontalement au-dessus de l'écran 2, et l'axe d'enroulement du masque inférieur 6 est disposé horizontalement au-dessous de l'écran 2, comme montré à la figure 1.

Pour chaque masque, la toile 8 correspondante peut être déroulée verticalement pour adapter la hauteur du masque. Par "verticalement", on entend ici que la toile est déroulée dans un plan vertical. En effet, comme illustré à la figure 3, la toile, en particulier celle du masque inférieur, est enroulée par l'arrière de l'axe d'enroulement, ce qui permet de la positionner toujours dans un plan parallèle au plan général de l'écran.

Le masque supérieur 5 comprend des moyens d'actionnement permettant la rotation de son axe d'enroulement 7 et donc l'ajustement de la hauteur de toile correspondante.

De plus, les axes d'enroulement des masques 5, 6 sont dépassants de part et d'autre de la toile, comme cela est illustré aux figures 1 et 2.

La toile 8 de chaque masque est constituée d'un tissu noir mat, et comporte un bord libre 9 et un bord enroulé 10.

Le masque inférieur 6 comporte:
(i) un raidisseur horizontal 12 de maintien du bord libre 9 de la toile 8, la longueur du raidisseur étant supérieure à la largeur de la toile comme montré par exemple à la figure 2, et
(ii) des moyens de commande du positionnement dans un plan vertical du raidisseur 12, indépendants des moyens d'actionnement de l'axe d'enroulement du masque supérieur 5.

Par "raidisseur", on entend tout profilé, tige métallique ou autre qui permette de constituer une armature pour le bord libre de la toile.

En outre, un même raidisseur maintient le bord libre de la toile du masque supérieur, formant un lest pour éviter que ladite toile ne soit flottante.

Les moyens de commande du positionnement vertical du raidisseur 12 consistent d'une part en des filins 13 fixés chacun sur une extrémité 14 du raidisseur 12 dépassant de la toile 8, et reliant chacun verticalement lesdites extrémités 14 à l'axe d'enroulement 7 par l'intermédiaire de poulies de renvoi 15 disposées au-dessus de l'axe d'enroulement de la toile, et d'autre part en des moyens d'actionnement en rotation de l'axe d'enroulement du masque inférieur 6, indépendants des moyens d'actionnement de l'axe d'enroulement du masque supérieur 5.

Comme illustré à la figure 1, la largeur de la toile 8 de chaque masque est supérieure ou égale à la largeur de l'écran 2 et le bord libre de la toile du masque inférieur recouvre le raidisseur de maintien, au moins sur la face avant de celui-ci.

De plus, la toile 8 de chaque masque est enroulée autour de l'axe d'enroulement correspondant par l'arrière de celui-ci, comme illustré à la figure 3.

En outre, une fois le dispositif installé, seules les parties en toile des masques supérieur 5 et inférieur 6 sont visibles, étant donné que les moyens de commande du positionnement des masques, en particulier les moyens de commande du positionnement du masque inférieur (filin 13, extrémités dépassantes 14 du raidisseur et extrémités dépassantes de l'axe d'enroulement, et poulies 15), qui sont situés essentiellement de part et d'autre de l'écran 2, peuvent être facilement dissimulés derrière un coffrage formant un cadre qui suit les contours de l'écran (non illustré au dessin). Des rideaux 16 peuvent ensuite compléter la finition de l'ensemble, comme cela est illustré à la figure 1.

Les moyens d'actionnement en rotation de chaque axe d'enroulement consistent en un moteur (non illustré) disposé à l'intérieur de chacun desdits axes d'enroulement 7, qui est relié à un point fixe 17 situé à l'extérieur dudit axe 7, comme illustré à la figure 2.

En outre, la commande de chaque moteur est réalisée à distance par télécommande.

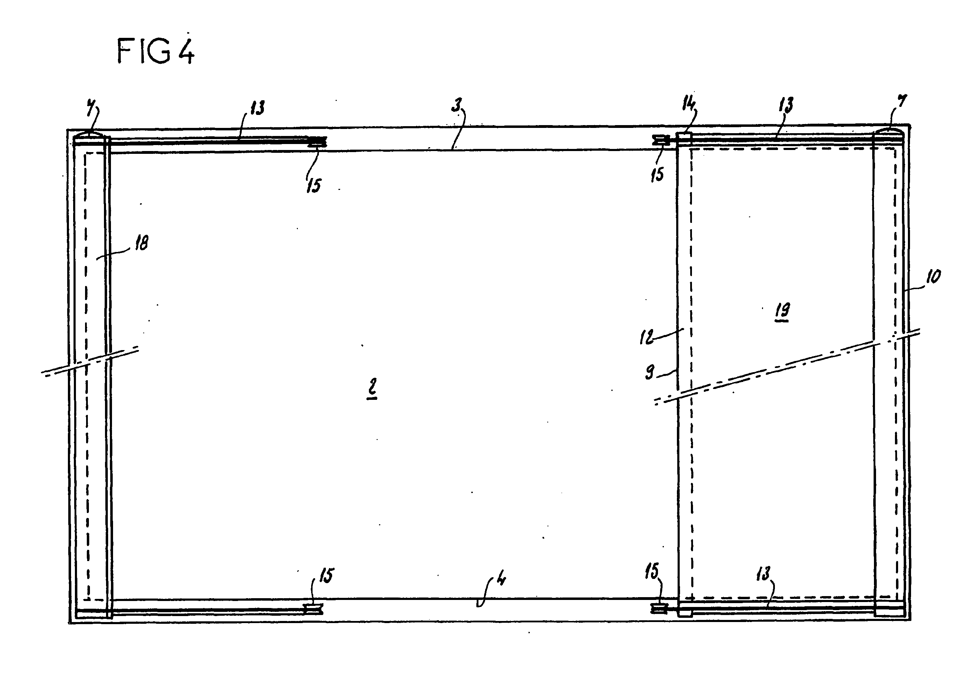

Selon un second exemple, le dispositif n'est constitué que de masques gauche 18 et droit 19, comme cela est illustré à la figure 4.

Dans ce cas, chaque masque gauche 18 et droit 19 est très similaire au masque bas - ou inférieur - 6 décrit ci-avant, et comporte:
(i) un raidisseur 12 de maintien du bord libre 9 de la toile 8 de chaque masque (18, 19), la longueur du raidisseur étant supérieure à la longueur de la toile, et
(ii) des moyens de commande du positionnement du raidisseur dans un plan sensiblement parallèle au plan de l'écran et selon une direction perpendiculaire à la direction de déroulement de la toile.

Lesdits moyens de commande consistent d'une part en des filins 13 fixés chacun sur une extrémité 14 du raidisseur dépassant de la toile et reliant chacun, selon une direction sensiblement parallèle à la direction de déroulement de la toile, lesdites extrémités 14 à l'axe d'enroulement 7 par l'intermédiaire de poulies de renvoi 15 disposées chacune en regard d'une extrémité dépassante 14 correspondante et à distance de l'axe d'enroulement 7, et consistent d'autre part en des moyens d'actionnement en rotation de l'axe d'enroulement 7, de sorte que chaque toile 8 peut être déroulée depuis son axe en direction du centre de l'écran 2 pour adapter la surface occultante du masque correspondant.

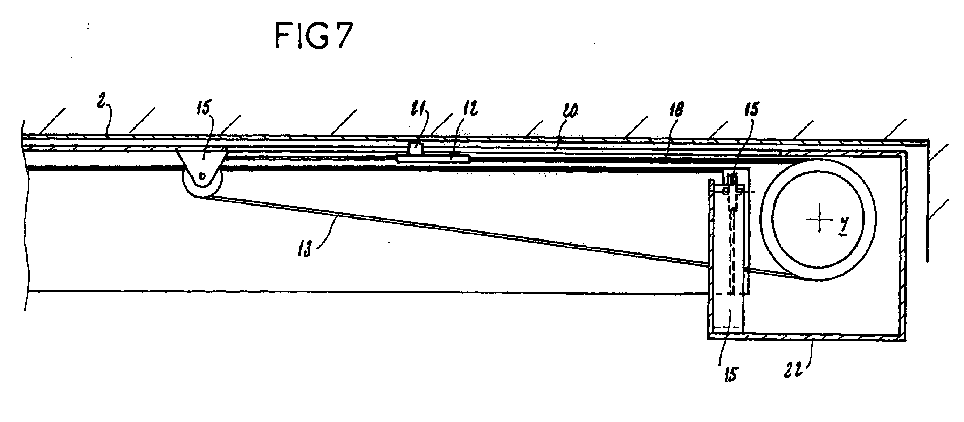

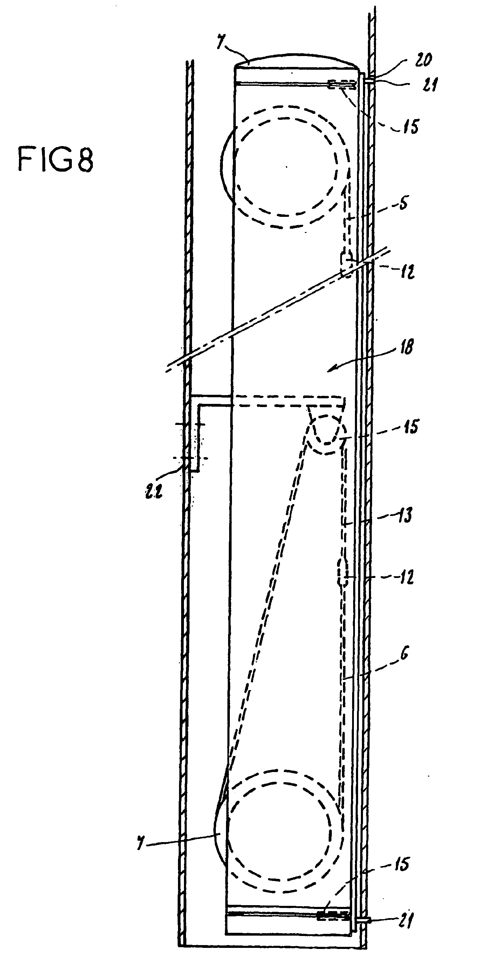

Dans l'exemple illustrée aux figures 7 et 8 les moyens de commande des deux masques gauche 18 et droit 19 sont reliés, de sorte que les mouvements des toiles correspondantes sont symétriquement opposés par rapport à l'axe médian vertical de l'écran.

En outre dans ce cas, la liaison des moyens de commande des masques gauche et droit consiste en une liaison électrique entre les moyens d'actionnement en rotation de leurs axes d'enroulement respectifs, de sorte que les mouvements de rotation desdits axes soient simultanés, en sens inverse l'un de l'autre. Chaque masque dispose donc de moyens de commande à renvoi de poulies, et d'un moteur (non illustré au dessin) formant moyen d'actionnement en rotation de son axe d'enroulement. Le moteur de chacun des masques gauche et droit est dissimulé à l'intérieur de l'axe d'enroulement correspondant.

Néanmoins selon une forme d'exécution alternative non illustrée au dessin, on peut aussi prévoir que la liaison des moyens de commande des masques gauche et droit consiste en une liaison mécanique directe entre leurs axes d'enroulement, de sorte que les mouvements de rotation desdits axes soient simultanés, en sens inverse l'un de l'autre. Dans ce cas, un seul des axes d'enroulement du masque gauche ou du masque droit comporte un moteur formant moyen d'actionnement, et les deux axes d'enroulement gauche et droit sont reliés par exemple par un filin - ou bien une corde ou une chaîne - qui est croisé entre les deux axes de sorte que les mouvements de rotation desdits axes soient simultanés, en sens inverse l'un de l'autre.

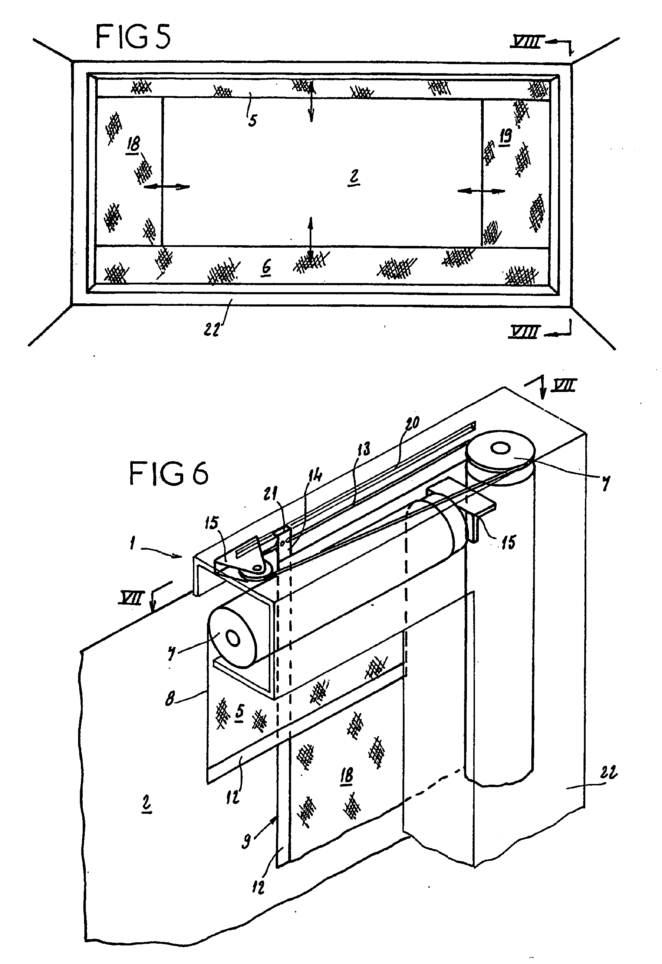

Comme cela est illustré aux figures 6, 7 et 8 (non illustré à la figure 4), les toiles 8 des masques gauche 18 et droit 19, ainsi que les raidisseurs 12 correspondants doivent être maintenus horizontalement, pour éviter leur déformation sous l'effet de leur propre poids. Pour cela, la toile 8 est tendue entre son raidisseur 12 et son axe d'enroulement 7, et le raidisseur est fixé en coulissement horizontal grâce à des moyens de maintien. Ces moyens de maintien peuvent prendre toute forme appropriée et notamment, comme illustré à la figure 6, la forme d'une glissière 20 horizontale disposé à la partie haute du dispositif, légèrement au-dessus du bord supérieur 3 de l'écran 2, glissière dans laquelle est fixé en coulissement horizontal, un ergot 21 du raidisseur 12, ledit ergot étant de préférence disposé à la partie terminale dudit raidisseur comme cela est illustré à la figure 6.

Le même système de glissière 20 formant moyens de maintien du raidisseur 12 peut également être disposé symétriquement par rapport à l'écran, dans la partie basse du dispositif, auquel cas, un ergot 21 disposé à l'extrémité basse de chaque raidisseur gauche et droit, est fixé en coulissement horizontal dans ladite glissière basse 20.

Alternativement, une forme d'exécution non illustrée au dessin des moyens de maintien des raidisseurs des masques gauche et droit, consistent en des profilés en U, dans lesquels sont disposés en coulissement, les extrémités distales des raidisseurs. L'effet technique obtenu est alors identique à la forme d'exécution des moyens de maintien décrits ci-dessus: le raidisseur de chaque masque gauche et droit est maintenu verticalement et peut coulisser horizontalement lors du déroulement ou de l'enroulement de la toile du masque, de sorte que chaque raidisseur est toujours parfaitement vertical, notamment pendant son déplacement, et se déplace toujours parfaitement horizontalement.

Enfin, selon une troisième exemple illustrée aux figures 5 à 8, le dispositif 1 comporte deux paires de masques: une paire de masques haut 5 et bas 6, et une paire de masques gauche 18 et droit 19.

Dans toutes les variantes d'exécution décrites ci-dessus à titre d'exemple, et comme illustré au dessin, le dispositif - en particulier les axes d'enroulement 7, les filins 13, et les poulies de renvoi 15 sont dissimulés derrière un carter de protection 22. Ce carter joue un rôle essentiellement esthétique et de protection contre la poussière dans le cas d'un dispositif ne comportant que des masques haut et bas, ou gauche et droit.

Néanmoins, dans le cas où le dispositif de masque comporte une combinaison de pairles de masques droit et gauche, et haut et bas, ce carter 22 sert également à fixer certaines des poulies de renvoi 15.

En effet, dans le cas où le dispositif comporte quatre masques disposés face à face par paires autour de l'écran, les masques latéraux (18, 19) sont disposés de manière à encadrer les masques haut 5 et bas 6. Dans ce cas, les poulies 15 du masque, bas, si elles étaient disposées comme décrit ci-dessus dans le cas du deuxième exemple, constitueraient un obstacle au déploiement des toiles des masques gauche et droit. Pour cette raison, et comme illustré aux figures 7 et 8, les deux poulies de renvoi du masque bas, situées aux extrémités gauche et droite du raidisseur, sont fixées sur la surface interne de la partie avant du carter 22. Ainsi, les masques gauche 18 et droit 19 ne sont pas gênés lors de leur déroulement entre l'écran 2 et les masques haut 5 et bas 6.

De même, les axes d'enroulement des masques haut et bas sont fixés au carter 22 et non au mur, comme cela est illustré à la figure 6, pour les raisons exposées ci-dessus.

Dans ce dernier cas où le dispositif comporte quatre masques, les mouvements des masques peuvent être simultanés, mais il peut également être possible de décomposer les déplacements des masques haut et bas d'une part, et ceux des masques latéraux droit et gauche d'autre part.

Comme cela est illustré à la figure 6, chacun des filins 13 qui relient le raidisseur 12 à l'axe motorisé 7, peut être disposé en boucle c'est-à-dire que les deux extrémités de ce filin sont fixées au raidisseur 12, la boucle formée par ledit filin étant tendue entre le réa de la poulie 15, et 1a gorge de l'axe motorisé correspondant 7.

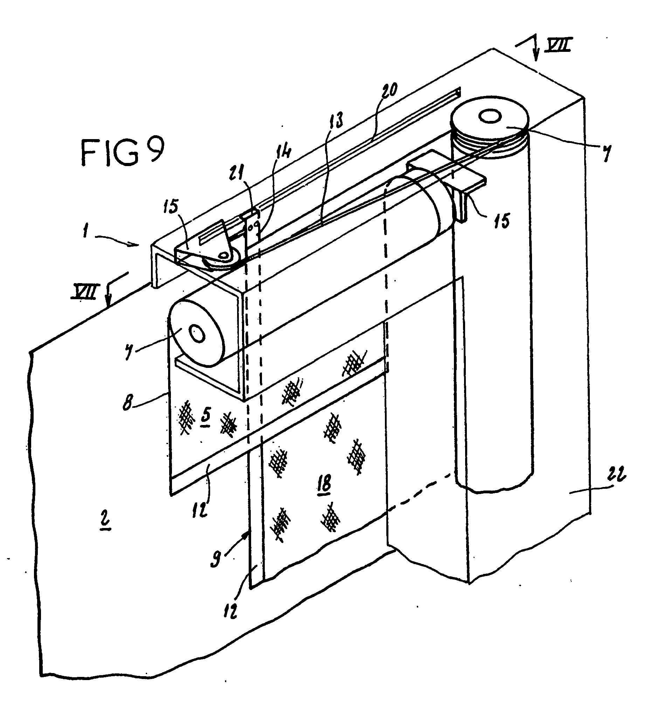

Alternativement, comme représenté à la figure 9, chaque filin 13 est disposé de telle sorte qu'une première de ses extrémités est fixée à la partie dépassante 14 du raidisseur 12, tandis que l'autre extrémité est fixée directement sur le tambour de l'axe motorisé correspondant 7. On prendra garde dans une telle configuration, de réaliser un enroulement du filin autour de l'axe motorisé sur plusieurs tours successifs, afin d'améliorer la tenue dudit filin sur l'axe 7.

II va de soi que l'invention n'est pas limitée à la forme de réalisation décrite ci-dessus à titre exemple mais qu'elle en embrasse au contraire toutes les variantes qui sont couverts par les revendications ajoutées. Ainsi, la rotation des axes d'enroulement des masques pourrait être effectuée manuellement, ou être motorisée comme décrit ci-dessus avec asservissement à la détection d'une source vidéo particulière. Dans ce dernier cas, les moteurs sont des moteurs pas à pas, reliés à la source vidéo par l'intermédiaire d'un boîtier électronique de manière à permettre la détection du format d'image vidéo projeté sur l'écran, et l'ajustement correct de la hauteur des masques supérieur et inférieur.

## Revendications

1. Dispositif (1) de masques pour écran de cinéma comprenant au moins deux masques disposés en avant dudit écran (2), et placés par paires symétriquement le long d'au moins deux côtés gauche et droit, et/ou haut et bas de celui-ci, chaque masque comprenant un axe d'enroulement (7) et une toile (8) enroulée autour dudit axe,' chaque axe d'enroulement (7) étant dépassant de part et d'autre de la toile (8), et chaque toile comportant un bord enroulé (10) et un bord libre (9), tandis qu'au moins le masque inférieur (6) et/ou la paire de masques gauche (18) et droit (19) comporte(nt):
- un raidisseur (12) de maintien du bord libre (9) de la toile de chaque masque, la longueur du raidisseur (12) étant supérieure à la longueur de la toile (8), et
- des moyens de commande du positionnement du raidisseur (12) dans un plan sensiblement parallèle au plan de l'écran (2) et selon une direction perpendiculaire à la direction de déroulement de la toile (8), lesdits moyens consistant d'une part en des filins (13) fixés chacun sur une extrémité (14) du raidisseur dépassant de la toile et reliant chacun, selon une direction sensiblement parallèle à la direction de déroulement de la toile, lesdites extrémités (14) à l'axe d'enroulement (7) par l'intermédiaire de poulies de renvoi (15) disposées chacune en regard d'une extrémité dépassante (14) correspondante et à distance de l'axe d'enroulement (7), et d'autre part en des moyens d'actionnement en rotation de l'axe d'enroulement (7), de sorte que chaque toile (8) peut être déroulée depuis son axe en direction du centre de l'écran pour adapter la surface occultante dudit masque, **caractérisé en ce que** la première extrémité de chaque filin (13) est fixée à la partie dépassante (14) du raidisseur (12), tandis que l'autre extrémité est fixée directement sur le tambour de l'axe motorisé correspondant (7).

2. Dispositif (1) selon la revendication 1, **caractérisé en ce que** l'autre extrémité du filin est enroulée autour de l'axe motorisé sur plusieurs tours successifs.

3. Dispositif (1) selon la revendication 1 ou 2, **caractérisé en ce qu'**il comporte une paire de masques supérieur (5) et inférieur (6), le masque supérieur comprenant des moyens d'actionnement permettant la rotation de son axe d'enroulement et donc l'ajustement de la surface occultante de la toile correspondante, les moyens d'actionnement du masque inférieur étant indépendants de ceux du masque supérieur.

4. Dispositif (1) selon l'une quelconque des revendications 1 à 3, **caractérisé en ce qu'**il comporte des masques gauche (18) et droit (19) dont les moyens de commande sont reliés, de sorte que les mouvements des toiles (8) desdits masques gauche et droit sont symétriquement opposés par rapport à l'axe médian vertical de l'écran (2)

5. Dispositif (1) selon la revendication 4, **caractérisé en ce que** la liaison des moyens de commande des masques gauche (18) et droit (19) consiste en une liaison mécanique directe entre leurs axes d'enroulement (7), de sorte que les mouvements de rotation desdits axes soient simultanés, en sens inverse l'un de l'autre.

6. Dispositif (1) selon la revendication 4, **caractérisé en ce que** la liaison des moyens de commande des masques gauche (18) et droit (19) consiste en une liaison électrique entre les moyens d'actionnement en rotation de leurs axes d'enroulement (7) respectifs, de sorte que les mouvements de rotation desdits axes soient simultanés, en sens inverse l'un de l'autre.

7. Dispositif (1) selon l'une des revendications 1 à 6, **caractérisé en ce qu'**il comporte des masques gauche (18) et droit (19) dont les raidisseurs (12) sont chacun maintenus verticalement par des moyens de maintien (20, 21).

8. Dispositif (1) selon la revendication 7, **caractérisé en ce que** les moyens de maintien des raidisseurs des masques gauche (18) et droit (19) consistent en au moins une glissière (20) disposée horizontalement au-dessus et/ou au dessous de l'écran, dans laquelle sont insérées en coulissement au moins un ergot (21) du raidisseur (12).

9. Dispositif (1) selon les revendications 1 à 8, **caractérisé en ce que** la largeur de la toile (8) de chaque masque (5, 6) est supérieure ou égale à la largeur ou à la hauteur de l'écran (2).

10. Dispositif (1) selon les revendications 1 à 9, **caractérisé en ce que** le bord libre (9) de la toile de chaque masque équipé d'un raidisseur recouvre le raidisseur de maintien (12) de ce masque, au moins sur la face avant de celui-ci.

11. Dispositif (1) selon les revendications 1 à 10, **caractérisé en ce que** la toile (8) de chaque masque (5, 6) est enroulée autour de l'axe d'enroulement (7) correspondant, par l'arrière ou par l'avant, de celui-ci, de telle sorte que la toile de chaque masque soit verticale et donc située dans un plan parallèle au plan général de l'écran.

12. Dispositif (1) selon les revendications 1 à 11, **caractérisé en ce que** les moyens d'actionnement en rotation des axes d'enroulement (7) consistent chacun en un moteur disposé à l'intérieur de chacun desdits axes d'enroulement et relié à un point fixe (17) situé à l'extérieur dudit axe.

13. Dispositif (1) selon la revendication 12, **caractérisé en ce que** chaque moteur est commandé à distance par télécommande.

14. Dispositif (1) selon l'une quelconque des revendications 1 à 13, **caractérisé en ce que** chaque toile (8) est constituée d'un tissu noir mat.

## Claims

1. Device (1) consisting of masks for a cinema screen, said device comprising at least two masks which are disposed in front of the said screen (2) and are located in pairs symmetrically along at least two left-hand and right-hand, and/or top and bottom sides of the latter, each mask comprising a winding shaft (7) and a piece of cloth (8) which is wound round the said shaft, each winding shaft (7) protruding on either side of the piece of cloth (8), and each piece of cloth having a wound edge (10) and an unattached edge (9), while at least the lower mask (6) and/or the left-hand (18) and right-hand (19) pair of masks has/have:
- a stiffener (12) for holding the unattached edge (9) of the piece of cloth of each mask in position, the length of the stiffener (12) being greater than the length of the piece of cloth (8), and
- means for controlling the positioning of the stiffener (12) in a plane substantially parallel to the plane of the screen (2) and in a direction perpendicular to the direction of unwinding of the piece of cloth (8), the said means consisting, on the one hand, of ropes (13) which are each fixed onto an end (14) of the stiffener protruding from the piece of cloth and each connect, in a direction substantially parallel to the direction of unwinding of the piece of cloth, the said ends (14) to the winding shaft (7) via return pulleys (15) each disposed opposite a corresponding protruding end (14) and at a distance from the winding shaft (7), and, on the other hand, means for driving said winding shaft (7) in rotation, such that each piece of cloth (8) can be unwound from its shaft in the direction of the centre of the screen in order to adjust the concealing surface of the said mask, **characterised in that** the first end of each rope (13) is fixed to the protruding part (14) of the stiffener (12), while the other end is fixed directly onto the drum of the corresponding motorised shaft (7).

2. Device (1) according to claim 1, **characterised in that** the other end of the rope is wound round the motorised shaft over a number of successive turns.

3. Device (1) according to claim 1 or 2, **characterised in that** it has a pair of upper (5) and lower (6) masks, the upper mask comprising driving means which permit rotation of its winding shaft and therefore adjustment of the concealing surface of the corresponding piece of cloth, the means for driving the lower mask being independent of those for the upper mask.

4. Device (1) according to any of claims 1 to 3, **characterised in that** it has left-hand (18) and right-hand (19) masks whose control means are connected, such that the movements of the pieces of cloth (8) of the said left-hand and right-hand masks are symmetrically opposed in relation to the vertical median axis of the screen.

5. Device (1) according to claim 4, **characterised in that** the link between the control means of the left-hand (18) and right-hand (19) masks consists in a direct mechanical link between their winding shafts (7), such that the rotational movements of the said shafts are simultaneous, in the opposite direction to one another.

6. Device (1) according to claim 4, **characterised in that** the link between the control means of the left-hand (18) and right-hand (19) masks consists in an electrical link between the means for driving their respective winding shafts (7) in rotation, such that the rotational movements of the said shafts are simultaneous, in the opposite direction to one another.

7. Device (1) according to one of claims 1 to 6, **characterised in that** it has left-hand (18) and right-hand (19) masks whose stiffeners (12) are each held in position vertically by holding means (20, 21).

8. Device (1) according to claim 7, **characterised in that** the means for holding the stiffeners of the left-hand (18) and right-hand (19) masks in position consist in at least one slide (20) which is disposed horizontally above and/or below the screen and in which at least one lug (21) on the stiffener (12) is inserted in a sliding manner.

9. Device (1) according to claims 1 to 8, **characterised in that** the width of the piece of cloth (8) of each mask (5, 6) is greater than, or equal to, the width or height of the screen (2).

10. Device (1) according to claims 1 to 9, **characterised in that** the unattached edge (9) of the piece of cloth of each mask equipped with a stiffener covers the stiffener for holding the said mask in position (12), at least on the front face of the latter.

11. Device (1) according to claims 1 to 10, **characterised in that** the piece of cloth (8) of each mask (5, 6) is wound round the corresponding winding shaft (7), at the rear or front of the latter, such that the piece of cloth of each mask is vertical and is therefore situated in a plane which is parallel to the general plane of the screen.

12. Device (1) according to claims 1 to 11, **characterised in that** the means for driving the winding shafts (7) in rotation each consist of a motor which is disposed inside each of the said winding shafts and is connected to a fixed point (17) situated outside the said shaft.

13. Device (1) according to claim 12, **characterised in that** each motor is controlled at a distance by remote control.

14. Device (1) according to any of claims 1 to 13, **characterised in that** each piece of cloth (8) is made up of a matt black fabric.

## Patentansprüche

1. Makierungsvorrichtung (1) für eine Filmleinwand, mindestens zwei Masken umfassend, die vor der Leinwand (2) angeordnet sind und paarweise symmetrisch entlang mindestens der linken und rechten Seite und/oder über oder unter dieser platziert sind, wobei jede Maske eine Wickelachse (7) und eine um die Achse gewickelte Plane (8) aufweist und die Wickelachse (7) beidseitig die Plane (8) überragt und wobei jede Plane einen aufgewickelten Rand (10) und einen freien Rand (9) aufweist, während mindestens die untere Maske (6) und/oder das Paar aus linker (18) und rechter (19) Maske umfassen:
- ein Versteifungselement (12) zum Halten des freien Randes (9) der Plane jeder Maske, wobei die Länge des Versteifungselementes (12) größer als die Länge der Plane (8) ist und
- Mittel zur Steuerung der Positionierung des Versteifungselements (12) in einer im Wesentlichen zur Ebene der Leinwand (2) parallelen Ebene und gemäß einer Richtung senkrecht zur Richtung des Abwickelns der Plane (8), wobei die Mittel einerseits aus Leinen (13), die jede an einem Ende (14) des Versteifungselementes, das über die Plane hinausgeht, befestigt sind und jede gemäß einer Richtung im Wesentlichen parallel zur Abwickelrichtung der Plane die Enden (14) der Wickelachse (7) über Umlenkrollen (5) verbinden, die jede gegenüberliegend zu einem korrespondierenden überragenden Ende (14) und mit Abstand zur Wickelachse (7) angeordnet sind, und andererseits aus Mitteln zur Drehbetätigung der Wickelachse (7) bestehen, derart, dass jede Plane (8) von ihrer Achse in die Richtung der Mitte der Leinwand abgerollt werden kann, um die verdeckende Fläche der Maske anzupassen, **dadurch gekennzeichnet, dass** das erste Ende jeder Leine (13) an dem überragenden Teil (14) des Versteifungselementes (12) befestigt ist, während das andere Ende direkt auf der Trommel der korrespondierenden motorisierten Achse (7) befestigt ist.

2. Vorrichtung (1) nach Anspruch 1, **dadurch gekennzeichnet, dass** das andere Ende der Leine um die motorisierte Achse über mehrere aufeinanderfolgende Umdrehungen aufgewickelt ist.

3. Vorrichtung (1) nach Anspruch 1 oder Anspruch 2, **dadurch gekennzeichnet, dass** sie ein Paar von oberer (5) und unterer (6) Maske aufweist, wobei die obere Maske Mittel zur Betätigung umfasst, die die Drehung ihrer Wickelachse und somit die Einstellung der verdeckenden Fläche der korrespondierenden Plane ermöglicht, wobei die Mittel zur Betätigung der unteren Maske unabhängig von denen der oberen Maske sind.

4. Vorrichtung (1) nach einem beliebigen der Ansprüche 1 bis 3, **dadurch gekennzeichnet, dass** sie eine linke (18) und eine rechte (19) Maske aufweist, deren Steuermittel derart verbunden sind, dass die Bewegungen der Planen (8) der linken und rechten Maske symmetrisch entgegengesetzt in Bezug auf die senkrechte Mittelachse der Leinwand (2) sind.

5. Vorrichtung (1) nach Anspruch 4, **dadurch gekennzeichnet, dass** die Verbindung der Steuermittel der linken (18) und rechten (19) Maske aus einer direkten mechanischen Verbindung zwischen ihren Wickelachsen (7) bestehen, derart, dass die Drehbewegungen der Achsen in zueinander umgekehrter Richtung simultan sind.

6. Vorrichtung (1) nach Anspruch 4, **dadurch gekennzeichnet, dass** die Verbindung der Steuermittel der linken (18) und rechten (19) Maske aus einer elektrischen Verbindung zwischen den Mitteln zur Drehbetätigung ihrer jeweiligen Wickelachsen (7) bestehen, derart, dass die Drehbewegungen der Achsen entgegengesetzt zueinander simultan sind.

7. Vorrichtung (1) nach einem der Ansprüche 1 bis 6, **dadurch gekennzeichnet, dass** sie eine linke (18) und rechte (19) Maske aufweist, deren Versteifungselemente (12) jede vertikal durch Haltemittel (20, 21) gehalten werden.

8. Vorrichtung (1) nach Anspruch 7, **dadurch gekennzeichnet, dass** die Haltemittel der Versteifungselemente der linken (18) und rechten (19) Maske aus mindestens einer Gleitschiene (20) besteht, die horizontal über und/oder unter der Leinwand angeordnet ist, in die gleitend mindestens ein Zapfen (21) des Verstärkungselementes (12) eingefügt ist.

9. Vorrichtung (1) nach den Ansprüchen 1 bis 8, **dadurch gekennzeichnet, dass** die Breite der Plane (8) jeder Maske (5, 6) größer oder gleich der Breite oder der Höhe der Leinwand (2) ist.

10. Vorrichtung (1) nach den Ansprüchen 1 bis 9, **dadurch gekennzeichnet, dass** der freie Rand (9) der Plane jeder mit einem Versteifungselement ausgerüsteten Maske das Halteversteifungselement (12) dieser Maske zumindest auf der Vorderfläche desselben überdeckt.

11. Vorrichtung (1) nach den Ansprüchen 1 bis 10, **dadurch gekennzeichnet, dass** die Plane (8) jeder Maske (5, 6) um die korrespondierende Wickelachse (7) von hinten oder von vorne derselben derart gewickelt ist, dass die Plane jeder Maske senkrecht und somit in einer Ebene parallel zur Gesamtebene der Leinwand angeordnet ist.

12. Vorrichtung (1) nach den Ansprüchen 1 bis 11, **dadurch gekennzeichnet, dass** die Mittel zur Drehbetätigung der Wickelachsen (7) jede aus einem Motor besteht, der im Inneren von jeder der Wickelachsen angeordnet ist und mit einem festen Punkt (17) verbunden ist, der außerhalb der Achse angeordnet ist.

13. Vorrichtung (1) nach Anspruch 12, **dadurch gekennzeichnet, dass** der Motor durch Fernsteuerung aus der Entfernung gesteuert wird.

14. Vorrichtung (1) nach einem beliebigen der Ansprüche 1 bis 13, **dadurch gekennzeichnet, dass** jede Plane (8) aus einem schwarzen Mattenstoff besteht.
